# FASCICULE DE BREVET EUROPEEN

(11) **EP 0 758 961 B1**
(45) Date de publication et mention de la délivrance du brevet: **13.10.1999**
(21) Numéro de dépôt: 95942254.4
(22) Date de dépôt: 13.12.1995
(51) Int. Cl.: B60N 3/14

(54) **CORPS D'ALLUMAGE POUR ALLUME-CIGARES, NOTAMMENT DE VEHICULE AUTOMOBILE**
ZIGARETTENANZÜNDERKÖRPER INSBESONDERE FÜR KRAFTFAHRZEUGE
LIGHTER BODY FOR A CIGARETTE LIGHTER, PARTICULARLY IN MOTOR VEHICLES

(30) Priorité: 13.12.1994 FR 9415103
(43) Date de publication de la demande: 26.02.1997
(73) Titulaire: VALEO VISION, 93012 Bobigny Cédex (FR)
(72) Inventeur: THIVET, Gilles, F-81290 Labruguière (FR)
(74) Mandataire: Gamonal, Didier
(86) Numéro de dépôt international: FR9501656
(87) Numéro de publication internationale: WO9618522

(56) Documents cités:
- EP-A- 0 436 865
- EP-A- 0 492 042
- FR-A- 2 272 343
- US-A- 3 863 047

## Description

La présente invention concerne un allume-cigares notamment pour véhicule automobile, du type défini dans le préambule de la revendication 1 et connu par exemple de FR-A-2655927.

Elle se rapporte plus particulièrement au corps d'allumage que comporte un tel allume-cigares.

Ainsi qu'on le sait, le corps d'allumage sert de réceptacle à un bouchon chauffant amovible doté d'un corps de chauffage pour allumer le cigare ou la cigarette et comporte une douille d'allumage électriquement conductrice, avec un fond, portant intérieurement à isolation électrique, par l'intermédiaire d'un organe de fixation et d'une première pièce d'isolation électrique, un organe de prise de courant usuellement en forme de bilame avec une base et des languettes d'orientation axiale issues de ladite base et dirigées vers l'extrémité ouverte de la douille d'allumage.

Plus précisément le bouchon présente une coupelle entourant le corps de chauffage et les lames du bilame de prise de courant ont chacune une extrémité libre en forme de crochet, en sorte qu'il est formé une pince propre à coopérer avec la coupelle du bouchon pour maintenir celui-ci en position de chauffage et établissement d'un circuit électrique à l'aide de pièces d'alimentation électriques portées par la douille d'allumage et reliées aux bornes de la source de tension, à savoir la batterie dans le cas d'une application à un véhicule automobile.

Lorsque le corps de chauffage atteint une température suffisante, les lames du bilame de prise de courant se dilatent pour interrompre ledit circuit.

Dans certains cas, ces lames peuvent rester accidentellement en prise avec la coupelle bien que le corps de chauffage ait atteint la température suffisante.

Ceci peut être une cause d'incendie du fait notamment que la paroi fixe sur laquelle est monté le corps d'allumage est usuellement en matière plastique.

Pour cette raison on a prévu dans le document FR-A-2 655 927 un élément de sécurité qui consiste en une languette constituant un contacteur bimétallique faisant partie intégrante du bilame de prise de courant.

Cette languette s'étend axialement en direction opposée aux lames du bilame et traverse pour ce faire à la faveur d'une ouverture le fond de la douille d'allumage.

Cette languette est propre à venir en contact avec une portion plane appartenant à la pièce d'alimentation électrique reliée à la borne de la batterie pour établir un court-circuit franc provoquant alors une augmentation importante du courant électrique, ce qui fait sauter immédiatement les fusibles de protection de l'allume-cigares et empêche que le maintien du bouchon de chauffage en position de chauffage ne produise un incendie.

Cette disposition ne nécessite pas d'augmenter la longueur axiale de la douille d'allumage et cette languette de sécurité est sensible à la température du bilame de prise de courant en sorte qu'elle peut être parcourue par un grand flux thermique contrairement à la disposition décrite dans le document DE-A-1 950 758 dans laquelle la languette de sécurité est montée à l'extérieur de la douille d'allumage pour venir en contact avec une enveloppe métallique de fixation entourant cette douille en étant fixée à celle-ci par vissage.

Cette languette est alors isolée par rapport à la douille et est sensible à la température de l'organe de prise de courant via l'organe de fixation en sorte que le flux thermique n'est pas très important.

En pratique dans le document FR-A-2 655 927 cette languette de sécurité porte un plot de contact propre à coopérer avec une portion plane appartenant à la pièce d'alimentation électrique reliée à la borne négative de la batterie.

Cette pièce, dénommée ci-après seconde pièce d'alimentation électrique, est disposée à l'extérieur de la douille d'allumage en étant reliée électriquement au fond de celle-ci, tandis que l'autre pièce d'alimentation électrique, dite ci-après première pièce d'alimentation électrique, est reliée au bilame de prise de courant via l'organe de fixation avec intervention d'une seconde pièce d'isolation électrique intercalée entre lesdites pièces d'alimentation électriques.

Il en résulte que cette disposition à plot de contact est relativement coûteuse.

La présente invention a pour objet de pallier cet inconvénient et donc de créer, de manière simple et économique, un dispositif de sécurité dépourvu de plot de contact.

Suivant l'invention un corps d'allumage du tue sus-indiqué est caractérisé en ce que la languette de sécurité est distincte du bilame de prise de courant en étant adjacente à la base dudit bilame, et en ce que cette languette de sécurité est propre à coopérer à son extrémité libre avec une partie convexe appartenant à la seconde pièce d'alimentation électrique en sorte que ladite languette de sécurité est dépourvue de plot de contact.

Grâce à l'invention il n'est pas besoin de prévoir un plot de contact sur la languette de sécurité et on évite en fonctionnement tout soudage de la languette de sécurité sur sa partie de contact associée appartenant à la seconde pièce d'alimentation électrique.

Ceci est réalisé grâce à la forme convexe de ladite partie de contact évitant une trop grande densité de courant lors de l'établissement et de la rupture du contact de sécurité.

On notera du fait que la languette de sécurité est distincte du bilame de prise de courant, que l'on peut choisir de manière adéquate sa matière et déterminer son épaisseur pour avoir un court-circuit franc.

On obtient ainsi un meilleur résultat que lorsque cette languette est monobloc avec le bilame de prise de courant.

L'élément de sécurité peut ne comporter qu'une seule languette de sécurité mais avantageusement cette languette appartient à un bilame de sécurité comportant deux languettes de sécurité d'orientation axiale, ledit bilame de sécurité étant monté tête-bêche par rapport au bilame de prise de courant.

Ainsi on améliore encore le fonctionnement du dispositif de sécurité du fait que celui-ci comporte deux languettes de sécurité propres chacune à coopérer avec une partie convexe appartenant à la seconde pièce d'alimentation électrique.

Avantageusement pour ce faire ces parties convexes sont supportées par la seconde pièce d'isolation électrique dotée de passages traversant pour ce faire dont l'un des bords a une forme complémentaire à la forme desdites parties convexes pour supporter celles-ci.

Cette seconde pièce d'isolation électrique masque avantageusement les languettes de sécurité.

De préférence l'extrémité libre des languettes de sécurité a en section une forme de V pour diminuer encore les risques de collage des languettes sur leur partie convexe de contact respective.

Dans une forme de réalisation la douille d'allumage porte une pièce de contact supplémentaire assemblée au contact de la base du bilame de prise de courant par l'intermédiaire de l'organe de fixation. Cette pièce est décalée axialement en direction du fond de la douille d'allumage par rapport aux crochets des lames du bilame de prise de courant.

Ainsi lorsque, accidentellement le bouchon reste enfoncé sans que les lames du bilame de prise de courant restent collées sur la coupelle du bouchon chauffant, il est possible au bout d'un temps déterminé de faire intervenir les lames du bilame de sécurité pour établir un court-circuit franc et éviter que la batterie ne se décharge tout en ménageant les lames du bilame de prise de courant.

La description qui va suivre illustre l'invention en regard des dessins annexés dans lesquels :

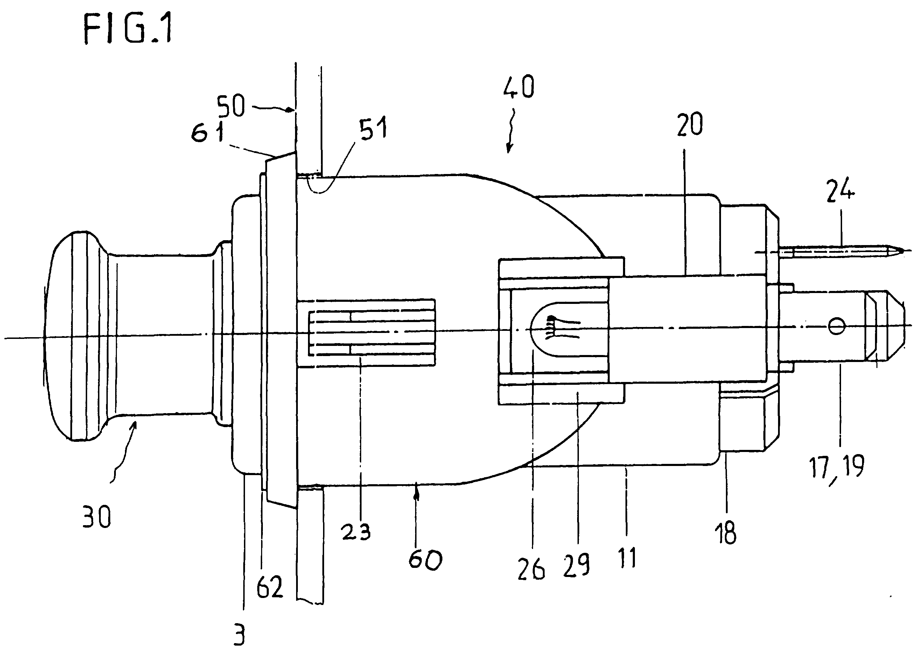

- la figure 1 est une vue d'un allume-cigares selon l'invention monté sur la paroi fixe d'un véhicule automobile ;
- la figure 2 est une vue en coupe axiale analogue correspondant celle de la figure 1 :
- la figure 3 est une vue selon la flèche 3 de la figure 1 sans la paroi fixe ;
- la figure 4 est une vue partielle de la douille d'allumage montrant une de ces ouvertures de dégagement.

Dans ces figures on a représenté un allume-cigares pour véhicule automobile comportant un bouchon chauffant amovible 30 et un corps d'allumage 40 formant réceptacle et prise de courant pour le bouchon 30.

Le corps d'allumage 40 présente une douille 6 d'allumage, électriquement conductrice, fermée à l'arrière par un fond, un organe de fixation 14 traversant ledit fond, un organe de prise de courant 12 monté à l'intérieur de la douille 6 et relié électriquement par l'organe de fixation 14 à une première pièce d'alimentation électrique 19 montée à l'extérieur de la douille 6, une première pièce d'isolation électrique 15 interposée entre l'organe de prise de courant 12 et le fond de la douille 6, une seconde pièce d'alimentation électrique 17 montée à l'extérieur de la douille 6 en étant adjacente au fond de celle-ci et reliée électriquement à ladite douille 6, une seconde pièce d'isolation électrique 18 interposée entre la première 19 et la seconde 17 pièce d'alimentation électrique, un élément de sécurité 16 présentant une languette de sécurité, globalement d'orientation axiale, propre à établir un court-circuit en cas de surchauffe du corps d'allumage 40, ledit organe de fixation 14 traversant les pièces d'isolation électrique 15,18 pour assemblage des pièces d'alimentation électriques 19,17, de l'organe de prise de courant 12, et de l'élément de sécurité 16.

Les pièces 6,12,14,16,17,19, ici métalliques, sont donc électriquement conductrices, tandis que les pièces 15,18 sont électriquement isolantes en étant avantageusement en matière plastique moulable.

Plus précisément ici l'organe de fixation 14 consiste en une vis métallique, en variante en un rivet, l'organe de prise de courant 12 est un bilame, les pièces 17,19 consistent en des languettes globalement d'orientation axiale, ici à base de cuivre, et l'élément de sécurité 16 est un bilame monté tête-bêche par rapport au bilame 12 en étant distinct de celui-ci.

Ces bilames 12,16 ont en section globalement une forme de U avec une base en forme de disque et deux languettes, globalement diamétralement opposées et d'orientation axiale.

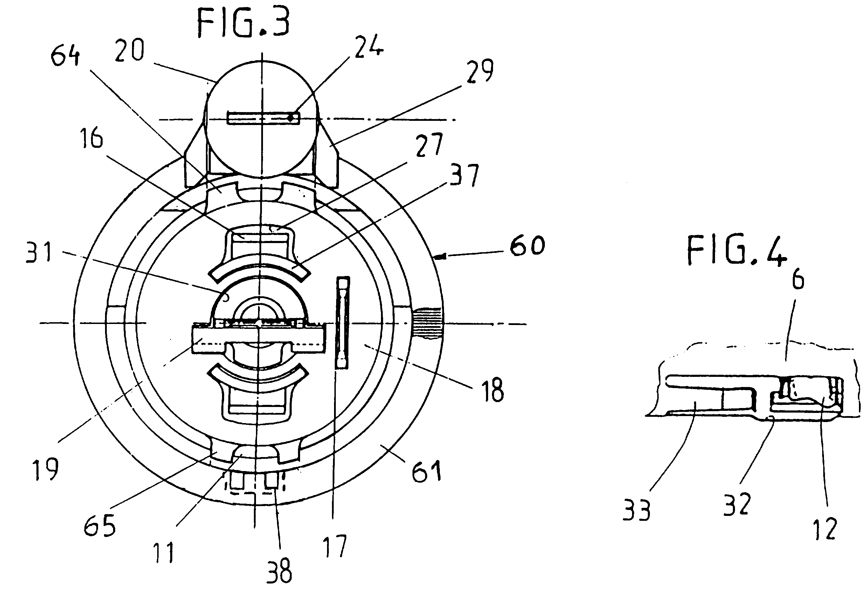

Les disques des bilames 12,16 sont en contact l'un avec l'autre, les lames du bilame 16 traversant le fond de la douille 6 à la faveur d'ouvertures 28, tandis que la douille 6 de forme cylindrique, ici en tôle emboutie, présente, en regard des lames du bilame 12 de prise de courant, deux ouvertures de dégagement 32, diamétralement opposées et délimitant également chacune une languette 33 (figure 4) pour la retenue du bouchon 30 en position d'attente.

La première pièce isolante 15 forme une entretoise axiale interposée entre la base du bilame 16 et le fond de la douille 6.

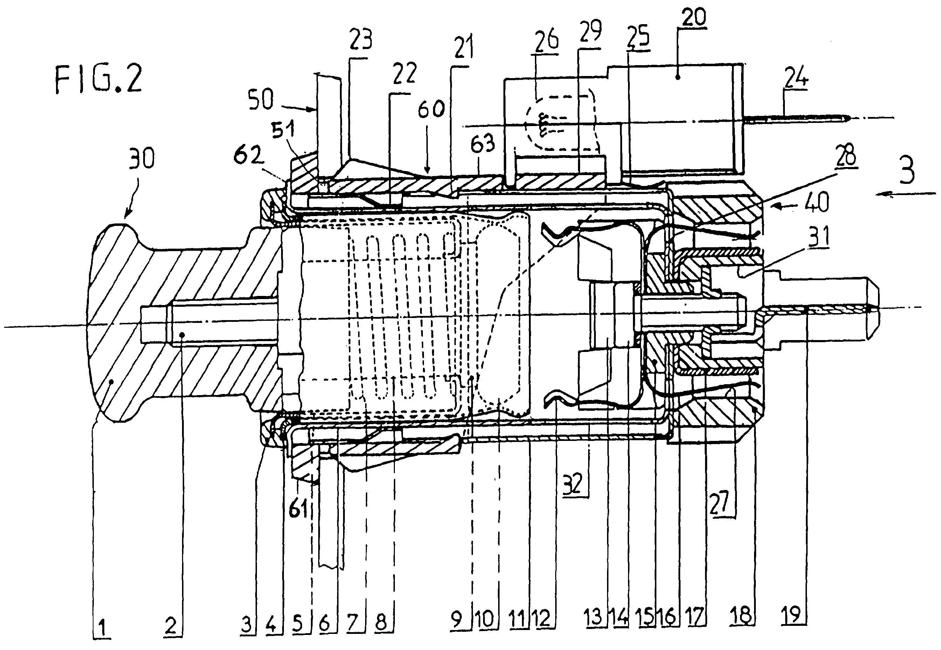

La deuxième pièce isolante 18 a globalement la forme d'une rondelle massive dotée d'une ouverture centrale traversante 31 pour passage de la vis 14 et de deux ouvertures latérales traversantes 27 pour, d'une part, le montage de deux parties de contact incurvées 37 ici suivant l'invention de manière convexe (figure 3), d'orientation axiale, de la seconde languette 17 et, d'autre part, le logement à jeu des languettes du bilame 16, dont les extrémités libres ont une section globalement en forme de V (figure 2) pour contact ponctuel avec les parties de contact convexes 37, ici bombées en forme d'arc-de-cercle, de la languette 17.

L'ouverture 31 est étagée pour définition d'un épaulement. C'est sur cet épaulement que prend appui la base de la languette 19 en forme d'équerre. Cette base, parallèle au fond de la douille 6, est trouée centralement avec formation d'une cheminée taraudée pour le vissage de l'extrémité de la vis 14.

La languette 17 a globalement également une forme d'équerre avec une base, formant une extrémité de fixation, parallèle à celle de la languette 19 et au fond de la douille 6. La rondelle isolante 18 forme donc une entretoise axiale entre les bases des languettes 17,19 à la faveur d'un fond délimité par l'ouverture étagée 31.

La rondelle 18 présente également (figure 3), globalement perpendiculairement aux ouvertures 27, une ouverture pour passage de manière complémentaire de la partie axiale de la languette 17.

L'ouverture 31 délimite également deux rainures, diamétralement opposées, pour le montage à la manière d'un tiroir de la partie axiale, pourvue d'un pli (figure 2), de la languette 19, qui s'étend ainsi perpendiculairement par rapport à la languette 17.

Ces languettes 17,19 sont immobilisées et positionnées (par coopération de formes) par la rondelle 18 et font saillies axialement par rapport à celle-ci en direction opposée au fond de la douille d'allumage 6. Ces languettes 17,19 sont épaulées à l'extérieur de la rondelle 18.

La rondelle 18 forme donc également une entretoise dans le sens transversal de la figure 2 entre les languettes 17,19.

Les lames du bilame 16 de sécurité et les parties de contact associées 37 en arc-de-cercle de la languette 17 sont masquées par la rondelle 18 (figure 2) et ne s'étendent donc pas en saillie axiale par rapport à cette rondelle 18.

Chaque ouverture 27 présente également à sa base deux rainures arquées (figure 3) pour montage par enfilage des parties 37 à la manière d'un tiroir. Ces parties 37 sont issues de la base de la languette 17 et s'étendent axialement vers l'extérieur en sorte que l'extrémité de fixation de la languette 17 a globalement en section la forme d'un U avec deux branches 37 en arc-de-cercle. Ces parties 37, diamétralement opposées, sont en contact avec le bord inférieur correspondant, en forme d'arc-de-cercle, de l'ouverture 27 (figure 3). Ce bord inférieur constitue donc un support pour les parties de contact 37.

Chaque ouverture 27 présente ainsi (figures 2 et 3) un bord supérieur d'orientation axiale, chanfreiné à chacune de ses extrémités, deux bords latéraux parallèles, globalement perpendiculaire au bord supérieur, et un bord inférieur, d'orientation axiale, en forme d'arc-de-cercle délimité latéralement par les rainures de montage des parties 37, lesdites rainures affectant les bords latéraux. En fonctionnement normal, les languettes du bilame 16 sont à distance chacune des bords latéraux et supérieurs de l'ouverture 27, ainsi que de la partie 37 concernée.

On appréciera que les chanfreins des bords supérieurs permettent d'éviter, en fonctionnement normal, tout contact entre, d'une part, la zone arrondie de raccordement de la lame du bilame 16 à sa base et le bord supérieur de l'ouverture 27, et, d'autre part, entre ce bord supérieur et l'extrémité en V de ladite lame.

Suivant une caractéristique la base de la languette 17 est en contact ici directement avec le fond d'une douille de masquage 11 entourant la douille d'allumage 6 pour masquer ses ouvertures 32.

Ainsi aucun fil ou câble ne peut toucher les lames du bilame 12 de prise de courant, qui peuvent se dilater à travers les ouvertures 32, sachant que dans un véhicule automobile l'allume-cigares est implanté dans une région, par exemple au niveau du tableau de bord, où passe de nombreux câbles et fils électriques. On ne risque pas ainsi d'endommager les fils ou câbles, de faire sauter des fusibles et/ou de provoquer un incendie.

Le fond arrière de la douille de masquage 11, électriquement conductrice, ici cylindrique en tôle emboutie, est en contact avec le fond de la douille d'allumage 6 et la vis 14 traverse à isolation électrique lesdits fonds troués centralement à cet effet.

Ici la pièce isolante 15, montée en majeure partie dans la douille 6, présente un nez central traversant les ouvertures centrales des fonds des douilles 6,11, la base de la languette 17 trouée centralement à cet effet, pour pénétrer dans la portion de diamètre réduit de l'ouverture 31 de la rondelle 18.

Ce nez central est traversé par la vis 14, qui permet un assemblage à serrage des pièces 12,15,16,11,6,17,18,19 entre elles.

La périphérie externe de ce nez présente au moins un méplat coopérant avec des méplats de forme complémentaire pratiqués dans les ouvertures en coincidence des fonds des douilles 6,11 et de la rondelle 18, les languettes 17 et 19 étant par ailleurs immobilisées par la rondelle 18 de manière précitée. Ainsi on obtient un blocage en rotation, par coopération de formes, des pièces 15,16,6,11,17,18,19 avec serrage de celles-ci de part et d'autre des fonds des douilles 11,6 grâce à la vis 14.

En variante le nez de la pièce isolante 15 peut avoir une forme polygonale par exemple de forme carrée et il en est de même des ouvertures complémentaires précitées.

En variante ces ouvertures et le nez de la pièce 15 peuvent être de forme cylindrique, la pièce 15 présentant latéralement, au moins un picot cylindrique traversant de manière complémentaire les fonds des douilles 6,11 et la rondelle 18.

Ce picot traverse alors également la base de la languette 17 de manière complémentaire ou non.

Par exemple le picot traverse des ouvertures oblongues pratiquées dans les douilles 6,9, la largeur des ouvertures étant égale au diamètre du picot, qui pénètre dans une encoche en forme de U à fond arrondi, pratiqué dans le bord latéral de la languette 17 apposée à celui associé à la partie axiale de la languette.

Le rayon du fond du U de l'encoche est égal au jeu de montage près à celui du picot. Un indexage et un blocage en rotation de la douille 11 est ainsi réalisé.

Bien entendu la rondelle 18 est échancrée au niveau du picot.

La pièce isolante 15, ici thermiquement isolante, permet également de positionner à jeu les bilames 12,16 et a pour ce faire la forme d'un gobelet avec une jupe d'orientation axiale dirigée vers l'extrémité ouverte de la douille 6 et un fond échancré pour passage des lames des bilames 16 traversant chacune à jeu un passage 28 formé par des ouvertures en coincidence pratiquées dans les fonds des douilles 6,11.

Le nez de la pièce 15 s'étend donc axialement en direction opposée de la jupe échancrée localement pour passage des lames du bilame 12 et ce en correspondance avec les ouvertures 32. La jupe de la pièce 15 est également échancrée pour passage d'au moins une languette d'une pièce de contact supplémentaire 13 avec le bouchon 30 lorsque celui-ci est en position enfoncée.

Cette pièce 13, à section globalement en forme de L, présente une base annulaire interposée entre la tête de la vis 14 et la base du bilame 12 de prise de courant.

Les lames du bilame 12, élastiquement déformables, ont chacune une extrémité libre conformée en forme de crochet dirigé l'un vers l'autre en sorte qu'il est formé une pince propre à coopérer avec la coupelle 10 du bouchon 30 pour maintien de celui-ci en position de chauffage.

Cette coupelle 10, électriquement conductrice, sert de logement à un corps de chauffage, usuellement une résistance chauffante (non visible) décrite par exemple dans le document FR-A-2 457 787 auquel on pourra se reporter pour plus de précision. Le bouchon chauffant 30 ne fait pas partie de l'invention et ne sera pas décrit plus en détail ici.

Pour mémoire on rappellera que ce bouchon 30 est propre à occuper une position d'attente, dans laquelle son pare-cendres 4, entourant la coupelle 10, vient en prise par son extrémité libre profilée (figure 2) avec les languettes de retenue 33, à extrémité libre en forme de crochet (figure 4), de la douille 6.

L'extrémité libre du pare-cendres 4 présente une collerette solidaire d'un anneau 3 en matière plastique permettant également, par surmoulage, la fixation d'une collerette appartenant à un tube-guide 5 avec un fond troué centralement pour formation d'une cheminée permettant le guidage d'un tube de support 8 solidaire d'un noyau 2, en matière électriquement et thermiquement isolante, présentant une queue filetée pour sa solidarisation à un bouton 1 de préhension en matière électriquement isolante. Les pièces 1,2 sont ici en matière plastique, comme l'anneau 3, et appartiennent avec le tube 8 et la coupelle 10 à une partie mobile axialement par rapport à une partie fixe comprenant les pièces 4,5, électriquement conductrices, solidarisées entre elles par l'anneau 3, la pièce 4 entourant la pièce 5. Ces parties sont mobiles l'une par rapport à l'autre à l'encontre d'un ressort à boudin 7 électriquement conducteur interposé entre le fond du tube guide 5 et la face dorsale du noyau 2 engagé à force dans le tube 8. Une rondelle électriquement isolante 9 est interposée axialement entre le fond du tube 8 et le fond de la coupelle 10 assemblés l'un à l'autre par un rivet (non visible) comme décrit dans le document FR-A-2 457 787.

Les pièces 4,5,8 sont en tôle emboutie.

Lorsque l'occupant du véhicule enfonce le bouton de préhension 1, la coupelle 10 se déplace axialement pour écarter les lames du bilame 12 et venir en prise avec celles-ci. Un circuit électrique est alors établi pour chauffage de la résistance chauffante du bouchon 30, sachant que normalement la languette 19 est reliée à la borne positive de la batterie, tandis que la languette 17 est reliée à la borne négative de la batterie.

Le courant électrique, dans cette position de chauffage du bouchon 30, est établi à travers les pièces 19,14,12,10,8,4,5,6 et 17 en sorte que pour une température déterminée de la résistance chauffante du bouchon 30 les lames du bilame 12 s'écartent pour libérer la coupelle 10, qui revient à sa position initiale sous l'action du ressort 7. Il ne reste plus ensuite qu'à extraire le bouchon 30 des languettes 33 pour allumer par exemple une cigarette.

Lorsque, accidentellement, en position de chauffage du bouchon 30, les lames du bilame 12 restent en prise avec la coupelle 10, il se produit un échauffement anormal conduisant le bilame 16 de sécurité à établir un court-circuit franc par coopération ponctuelle de ses lames avec les parties convexes de contact 37 de la languette de masse 17, ce qui provoque une surintensité faisant sauter le fusible de l'allume-cigares, évitant ainsi un risque d'incendie sachant que le corps d'allumage 40 est fixé sur une paroi 50 fixe du véhicule usuellement en matière plastique, tout comme la bague éclairante 60 à collerette ou anneau 61 d'extrémité, que présente ici le corps d'allumage de manière décrite ci-après.

La paroi 50 de montage et de fixation du corps d'allumage 40 peut être le tableau de bord ou une console du véhicule.

On appréciera que la forme en V de l'extrémité des lames du bilame de sécurité 16, en combinaison avec les parties 37, évite tout collage desdites lames sur les parties 37.

Fortuitement un objet peut venir en contact avec le bouton 1 et maintenir celui-ci en position enfoncée sans que l'occupant veuille allumer une cigarette. Il peut s'agir par exemple d'une valise ou d'un paquet mal calé maintenant le bouton 1 en position enfoncée. Dans ce cas un chauffage de la résistance chauffante se produit avec des phénomènes de battement des lames du bilame 12 de prise de courant.

En effet ces lames s'écartent de la coupelle 10 pour une température donnée de la résistance chauffante du bouchon 30, puis reviennent en contact avec la coupelle 10 puisque le bouton 1 reste coincé du fait par exemple que la valise empêche la coupelle 10 de se dégager sous l'action du ressort 7.

Pour éviter cela suivant une caractéristique la coupelle 10 est admise, lorsque le bouton 1 est enfoncé, à coopérer avec la languette axiale de la pièce de contact supplémentaire 13 électriquement conductrice. Cette pièce 13 est reliée électriquement à la borne de la batterie via la vis 14. Ainsi un autre circuit électrique direct est établi et ce indépendamment des oscillations du bilame 12 dont les lames sont admises à venir en contact avec la coupelle 10 et à s'écarter de celle-ci de manière précitée.

La base de cette pièce 13 étant interposée entre la tête de la vis 14 et le disque du bilame 12, il se produit, lorsque le bouton 1 reste fortuitement enfoncé de manière précitée, par échauffement une intervention du bilame de sécurité 16, dont les lames se resserrent pour venir en contact avec les parties 37 de la languette 17. Il se produit alors un court-circuit franc faisant sauter le fusible de sécurité de l'allume-cigares. On évite ainsi de décharger la batterie.

Bien entendu la position axiale de la pièce de contact 13 est déterminée selon les applications.

D'une manière générale cette languette est en retrait axialement par rapport aux crochets du bilame 12 et présente également une extrémité libre déformée pour contact ponctuel avec la coupelle 10 du bouchon 30.

On notera que la nature de la matière du bilame 16 de sécurité ainsi que son épaisseur dépend des applications, ledit bilame 16 étant ici en une matière qui diffère de celle du bilame 12 de prise de courant. La matière du bilame 16 est donc choisie de manière indépendante de celle du bilame 12 et il en est de même en ce qui concerne les épaisseurs des bilames 12,16.

Les caractéristiques de ce bilame 16 sont choisies pour qu'il se déclenche au-delà du temps normal de chauffage du bouchon 30 par exemple au bout de 30 secondes à 1 minute.

Ainsi le bilame de sécurité 16 a une double fonction à savoir une fonction normale de sécurité et une fonction supplémentaire pour éviter les battements des lames du bilame de prise de courant et ménager celui-ci au bénéfice de sa durée de vie.

Ainsi qu'il ressort à l'évidence de la description et des dessins la douille de masquage 11 présente un fond adjacent et relié électriquement au fond de la douille d'allumage 6.

Lesdits fonds peuvent être en contact direct l'un avec l'autre, mais bien entendu en variante une pièce électriquement conductrice peut être interposée entre lesdits fonds assemblés ensemble par l'intermédiaire de l'organe de fixation 14 du bilame 12 de prise de courant.

Cet organe de fixation 14 traverse pour ce faire, de manière précitée, à isolation électrique les fonds des douilles d'allumage 6 et de masquage 11.

Suivant une caractéristique la bague éclairante 60 entoure la douille de masquage 11 et présente au moins une languette de fixation élastiquement déformable propre à venir en contact (en appui) avec la face arrière de la paroi fixe 50 présentant une ouverture 51 traversée par la bague 60 et les douilles 6,11. La bague 60 est ici en contact intime avec la douille de masquage 11.

Des moyens de fixation 21 interviennent entre la douille de masquage 11 et la bague éclairante 60 pour fixation de la douille de masquage 11 dans la bague éclairante 60.

La douille d'allumage 6 présente à son extrémité libre ouverte un rebord frontal 62 globalement d'orientation transversale. Ce rebord 62, ici en forme de collerette, est en contact avec la face avant de l'anneau d'extrémité 61 de la bague éclairante 60. La face dorsale ou arrière de cet anneau 61 est en contact (en appui) avec la paroi avant de la paroi fixe 50.

La bague éclairante 60 porte une source d'éclairage 26. Cette bague 60 est, de manière connue en soi, en matière plastique translucide voire transparente et comporte ici venues de moulage deux languettes de fixation 23 diamétralement opposées et semi-découpées.

Ces languettes 23 sont d'orientation axiale et ont en section une forme de coin triangulaire, dont la face avant inclinée est propre à venir en prise avec la face arrière de la paroi fixe 50. Ces languettes 23 sont donc élastiquement déformables et, après assemblage, la paroi fixe 50 est prise en sandwich entre l'anneau 61 de la bague 60 et les faces avant inclinées des coins des languettes 23 permettant ainsi un rattrapage des jeux.

Ici les moyens de fixation 21 sont implantés au niveau de l'extrémité arrière de la bague éclairante 60 (axialement au-delà des languettes 23 en direction du bilame 12) et consistent en des crans issus de moulage de la paroi cylindrique 63 de la bague éclairante 60 et pénétrant chacun dans une ouverture associée pratiquée dans la paroi de la douille de masquage 11. Ces crans, saillants intérieurement par rapport à la paroi 63 de la bague 60, présentent une face inclinée raccordée à une face globalement d'orientation transversale formant épaulement.

Ici deux crans 21 et donc deux ouvertures associées sont prévus en étant diamétralement opposés.

Par ailleurs, la douille de masquage 11 présente, par découpe et pliage, au moins deux pattes 22 ici diamétralement opposées venant en contact avec la paroi de la douille d'allumage 6. Ces pattes 22 sont implantées axialement entre l'extrémité ouverte de la douille de masquage 11 et les moyens de fixation 21 pour ménager ceux-ci ainsi que la bague 60.

Ainsi il est créé des moyens de centrage intervenant entre la douille de masquage 11 et la douille d'allumage 6.

Grâce à cette disposition un espace précis est ménagé entre les parois des douilles 6 et 11, lesdits moyens de centrage étant implantés au voisinage des languettes 23 c'est-à-dire au voisinage de l'extrémité ouverte de la douille de masquage 11.

Initialement les languettes 23 font saillie à l'intérieur de la bague 60 préalablement montée dans l'ouverture 51 de la paroi fixe 50. On notera que la face arrière inclinée des coins des languettes 23 est plus longue que la face avant inclinée de blocage desdits coins., en sorte que l'enfilage de la bague 60 dans l'ouverture 51 est aisé, les languettes 23 s'escamotant vers l'intérieur lors de cet enfilage.

Ainsi on peut créer un ensemble unitaire imperdable comportant les douilles 6,11 avec les différents composants de l'allume-cigares notamment les bilames 12,16 et les languettes 17,19, puis enfiler cet ensemble à l'intérieur de la bague éclairante 60, dont les languettes 23 sont automatiquement soulevées et bloquées au contact de la face arrière de la paroi fixe 50 lors de cet enfilage ; les crans des moyens de fixation 21 pénétrant dans les ouvertures associées de la douille de masquage 11.

Ainsi qu'on l'aura compris on peut monter le corps d'allumage par la face avant de la paroi fixe 50 à travers l'ouverture 51.

Après on monte la source d'éclairage 26 par l'arrière. Plus précisément la source d'éclairage 26, ici une ampoule, est montée à l'intérieur d'un boîtier opaque 20 enfilé à la manière d'un tiroir sur deux pattes 29 d'orientation axiale formant glissière, lesdites pattes 29 étant venues de moulage avec l'extrémité arrière en forme de talon de la bague éclairante 60.

On notera que l'ampoule 26 présente une borne reliée à une languette d'alimentation électrique 24 propre à être reliée à la borne positive de la batterie. La languette 24 s'étend axialement parallèlement à la languette 19.

Le boîtier 20 porte une languette 25 courbe élastiquement déformable propre à venir en contact avec l'extrémité arrière de la douille de masquage et avec le culot de la lampe 26.

On notera, après montage (figure 2), que l'extrémité libre (ou avant) de la douille de masquage 11 est engagée à centrage (en contact intime) dans l'anneau 61. Cette extrémité libre est donc décalée axialement en direction du fond de la douille d'allumage 6 par rapport à la collerette 62, qui en variante peut consister en un rebord roulé comme divulgué dans le document US-A-2 701 297 précité.

Une bonne ventilation peut être obtenue ainsi entre les douilles 6,11.

En outre des moyens d'indexation angulaires et de guidage interviennent entre la bague éclairante 60 et la seconde pièce d'isolation 18. Ces moyens comportent au moins une saillie 64,65 porté par la périphérie externe de la rondelle 18 propre à être engagée à coulissement axial dans une rainure axiale complémentaire associée que présente intérieurement la paroi cylindrique 63 de la bague 60.

Ici deux saillies 64,65 diamétralement opposées (figure 3) sont prévues à la périphérie interne de la rondelle 18, en sorte que les risques de coincement sont minimisés. Ces saillies 64,65 ont une largeur différente pour formation d'un détrompeur.

Les saillies 64,65 sont fractionnées ici en paire de pattes 64,65 transversales engagées dans des rainures axiales correspondantes (non référencées) de la bague 60.

Bien entendu lesdites rainures sont avantageusement décalées par rapport aux crans des moyens de fixation 21.

Ainsi on enfile, de manière simple, la rondelle 18 dans lesdites rainures en sorte que les crans des moyens de fixation 21 viendront automatiquement en prise avec leurs ouvertures associées.

Il est avantageux pour ce faire que la rondelle 15 présente un picot de manière décrit ci-dessus, car cela permet d'indexer la douille 11 par rapport à la douille 6.

Avantageusement la bague 60 présente une saillie 38, fractionnée, ici en deux pattes axiales, propre à s'engager dans une encoche correspondante à section en forme de U à fond plat (visible en pointillés à la figure 3) pratiquée dans le bord de l'ouverture 51 de la paroi 50.

En variante l'encoche peut être délimitée centralement par une patte s'engageant entre les pattes axiales de la saillie 38.

Ainsi la bague éclairante est initialement prépositionnée et ne tournera pas lors de l'enfilage de l'ensemble douille de masquage - douille d'allumage, la saillie 38 étant issue de la face arrière de l'anneau 61 multifonctions.

On appréciera que les languettes 23 sont souples du fait de leur grande longueur axiale.

Avantageusement les ouvertures des moyens de fixations sont oblongues.

Bien entendu comme décrit dans le document FR-A-2 436 939 les languettes 23 peuvent s'étendre transversalement et le boitier 20 peut être d'un seul tenant avec la bague éclairante 3.

Dans ce cas il faut prévoir une ouverture dans la paroi 50 pour passage du boîtier 20.

On appréciera que l'on tire parti de la bague éclairante 60 et que la douille d'allumage 6 avec ses languettes 17,19 est du type standard.

L'allume-cigares selon l'invention est d'un montage aisé et d'une grande sûreté du fait de l'élément de sécurité 16 et de la languette supplémentaire 13.

Bien entendu la présente invention n'est pas limitée à l'exemple de réalisation décrit.

En particulier le nombre de pattes 22 et le nombre de languettes 23 peut être supérieur à deux tout cela dépendant des applications.

Il est possible d'inverser les structures. Ainsi les moyens de fixation peuvent comporter des pattes issues de la douille de masquage 11 et pénétrant dans des évidements associés pratiqués dans la bague éclairante 60.

De même les pattes de centrage 22 peuvent être issues de la douille d'allumage 6. Les bilames 12 et 16 peuvent être en une même matière et avoir la même épaisseur ou une épaisseur différente selon les applications. Le nez de centrage peut être porté par la rondelle 18 et pénétrer dans une creusure associée de la première pièce isolante 15.

Les moyens de fixation peuvent être du type baïonnette notamment lorsque les languettes s'étendent transversalement, par exemple des picots de la douille de masquage étant alors engagés dans des rainures baïonnette de la bague éclairante 60.

Bien entendu la présence de la douille de masquage n'est pas indispensable, la douille d'allumage pouvant être assemblée avec la bague éclairante comme décrit dans le document FR-A-2 436 939. En variante la présence de la bague éclairante n'est pas obligatoire et une seule languette de sécurité, et une seule partie 37 peuvent être prévues.

## Revendications

1. Corps d'allumage pour allume-cigares, notamment pour véhicule automobile, du genre comportant, une douille d'allumage (6) électriquement conductrice avec un fond portant intérieurement à isolation électrique, par l'intermédiaire d'un organe de fixation (14) et d'une première pièce d'isolation électrique (15), un bilame (12) de prise de courant avec une base et des languettes d'orientation axiale issues de ladite base et dirigées vers l'extrémité ouverte de la douille d'allumage (6), une première pièce d'alimentation électrique (19) reliée électriquement au bilame de prise de courant par l'intermédiaire de l'organe de fixation (14) électriquement conducteur, une seconde pièce d'alimentation électrique reliée électriquement à la douille d'allumage (6) en étant adjacente au fond de celle-ci, un élément de sécurité (16) présentant une languette de sécurité, globalement d'orientation axiale, traversant le fond de la douille d'allumage (6) et propre à venir en contact avec une partie de contact (37) appartenant à la seconde pièce d'alimentation électrique, caractérisé en ce que la languette de sécurité (16) est distincte du bilame de prise de courant (12) en étant adjacente à la base dudit bilame, et en ce que cette languette de sécurité (16) est propre à coopérer à son extrémité libre avec une partie convexe de contact (37) appartenant à la seconde pièce d'alimentation électrique (17) en sorte qua ladite languette de sécurité (16) est dépourvue de plot de contact.

2. Corps d'allumage selon la revendication 1, caractérise en ce que la languette de sécurité (16) appartient à un bilame de sécurité (16) comportant deux languettes de sécurité d'orientation axiale, ledit bilame de sécurité (16) étant monté tête-bêche par rapport au bilame de prise de courant, et en ce que chaque languette de sécurité est propre à coopérer avec une partie convexe de contact (37) appartenant à la seconde pièce d'alimentation électrique (17).

3. Corps d'allumage selon la revendication 2, dans lequel la seconde pièce d'alimentation électrique (17) consiste en une languette globalement d'orientation axiale et en forme d'équerre avec une base parallèle à celle du fond de la douille d'allumage (6) et servant à la fixation de ladite languette à ladite douille, caractérisé en ce que les parties de contact (37) sont issues de la base de ladite languette (17) et s'étendent axialement vers l'extérieur en sorte que l'extrémité de fixation de ladite languette d'alimentation électrique (17) a globalement en section la forme de U avec deux branches (37) formant lesdites parties de contact.

4. Corps d'allumage selon la revendication 2, caractérisé en ce que les extrémités libres des languettes du bilame de sécurité (16) ont une section globalement en forme de V pour contact ponctuel avec les parties convexes (37) de la seconde pièce d'alimentation électrique (19).

5. Corps d'allumage selon la revendication 2, caractérisé en ce que la seconde pièce d'isolation présente deux ouvertures latérales traversantes (27) pour d'une part, le montage des deux parties convexes (37) de la seconde pièce d'alimentation électrique et, d'autre part, le logement à jeu des languettes du bilame de sécurité (16).

6. Corps d'allumage selon la revendication 5, caractérisé en ce que chaque ouverture latérale traversante (27) présente un bord supérieur d'orientation axiale, chanfreiné à chacune de ses extrémités, deux bords latéraux parallèles, globalement perpendiculaires au bord supérieur, et un bord inférieur, d'orientation axiale, en forme d'arc-de-cercle pour support des parties de contact (37) convexes de la seconde pièce d'alimentation électrique (19).

7. Corps d'allumage selon la revendication 6, caractérisé en ce que le bord inférieur est délimite latéralement par deux rainures affectant également les bords latéraux pour montage des parties convexes de contact (37) de la seconde pièce d'alimentation électrique (17).

8. Corps d'allumage selon la revendication 1, caractérisé en ce qu'une pièce de contact supplémentaire (13) électriquement conductrice est interposée entre la tête de l'organe de fixation (14) et la base du bilame de prise de courant (12) et en ce que ladite pièce présente une languette d'orientation axiale propre à coopérer avec le bouchon chauffant associé au corps d'allumage.

## Claims

1. A lighter body for a cigar lighter, especially for a motor vehicle, of the kind comprising an electrically conductive lighter shell (6) with a base portion inside which there is carried, but electrically insulated from said base portion, by means of an interposed fastening member (14) and a first electrically insulating member (15), a pinch clip (12) for current take-off, with a base portion and axially orientated tongues projecting from the said base portion and directed towards the open end of the lighter shell (6), a first electrical power supply member (19) connected electrically to the current take-off pinch clip through the electrically conductive fastening member (14), a second electrical power supply member connected electrically to the lighter shell (6) and being adjacent to the base of the latter, and a safety element (16) comprising a generally axially orientated safety tongue extending through the base of the lighter shell (6) and adapted to come into contact with a contact portion (37) of the second electrical power supply member, characterised in that the safety tongue (16) is distinct from the current take-off pinch clip (12), being adjacent to the base portion of the said pinch clip, and in that the said safety tongue (16) is adapted to cooperate at its free end with a convex contact portion (37) of the second electrical power supply member (17), so that the said safety tongue (16) is without any contact pad.

2. A lighter body according to Claim 1, characterised in that the safety tongue (16) is part of a safety pinch clip (16) having two axially orientated safety tongues, the said safety pinch clip (16) being mounted back-to-back with respect to the current take-off pinch clip, and in that each safety tongue is adapted to cooperate with a convex contact portion (37) of the second electrical power supply member (17).

3. A lighter body according to Claim 2, in which the second electrical power supply member (17) consists of a tongue which is orientated generally axially and is of right-angled form, with a base portion parallel to that of the base portion of the lighter shell (6) and serving for fastening the said tongue to the said shell, characterised in that the contact portions (37) project from the base of the said tongue (17) and extend axially outwards, so that the fastening end of the said electrical power supply tongue (17) is of generally U-shaped cross section with two branches (37) constituting the said contact portions.

4. A lighter body according to Claim 2, characterised in that the free ends of the tongues of the safety pinch clip (16) are of generally V-shaped cross section, for point contact with the convex portions (37) of the second electrical power supply member (19).

5. A lighter body according to Claim 2, characterised in that the second insulating member has two lateral through holes (27) for the purpose of, firstly, mounting the two convex portions (37) of the second electrical power supply member and, secondly, accommodating, with a clearance, the tongues of the safety pinch clip (16).

6. A lighter body according to Claim 5, characterised in that each lateral through hole (27) has an axially orientated upper edge which is chamfered at each of its ends, two parallel side edges generally at right angles to the upper edge, and an axially orientated lower edge of arcuate form for supporting the convex contact portions (37) of the second electrical power supply member (19).

7. A lighter body according to Claim 6, characterised in that the lower edge is bounded laterally by two grooves which are also in the side edges for mounting the convex contact portions (37) of the second electrical power supply member (17).

8. A lighter body according to Claim 1, characterised in that an electrically conductive additional contact member (13) is interposed between the head of the fastening member (14) and the base portion of the current take-off pinch clip (12), and in that the said member has an axially orientated tongue adapted to cooperate with the heating plug associated with the lighter body.

## Patentansprüche

1. Anzündkörper für Zigarettenanzünder, insbesondere für Kraftfahrzeuge, umfassend eine elektrisch leitende Anzündhülse (6) mit einem Boden, der innen elektrisch isoliert über ein Befestigungsorgan (14) und ein erstes elektrisches Isolierteil (15) ein Stromanschlußbimetall (12) mit einem Fußstück und axial ausgerichteten Zungen trägt, die von dem besagten Fußstück ausgehen und zum offenen Ende der Anzündhülse (6) gerichtet sind, ein erstes Stromzuleitungsteil (19), das über das elektrisch leitende Befestigungsorgan (14) elektrisch mit dem Stromanschlußbimetall verbunden ist, ein zweites Stromzuleitungsteil, das elektrisch mit der Anzündhülse (6) verbunden ist, wobei es an deren Boden anliegt, ein Sicherheitselement (16), das eine insgesamt axial ausgerichtete Sicherheitszunge aufweist, die durch den Boden der Anzündhülse (6) hindurchgeht und mit einem Kontaktteil (37) in Kontakt kommen kann, der zu dem zweiten Stromzuleitungsteil gehört, **dadurch gekennzeichnet,** daß die Sicherheitszunge (16) von dem Stromanschlußbimetall (12) verschieden ist, wobei sie am Fußstück des besagten Bimetalls anliegt, und daß diese Sicherheitszunge (16) an ihrem freien Ende mit einem konvexen Kontaktteil (37) zusammenwirken kann, der zu dem zweiten Stromzuleitungsteil (17) gehört, so daß die besagte Sicherheitszunge (16) ohne Kontaktstück ausgeführt ist.

2. Anzündkörper nach Anspruch 1, **dadurch gekennzeichnet,** daß die Sicherheitszunge (16) zu einem Sicherheitsbimetall (16) gehört, das zwei axial ausgerichtete Sicherheitszungen umfaßt, wobei das besagte Sicherheitsbimetall (16) entgegengesetzt im Verhältnis zum Stromanschlußbimetall angebracht ist, und daß jede Sicherheitszunge mit einem konvexen Kontaktteil (37) zusammenwirken kann, der zu dem zweiten Stromzuleitungsteil (17) gehört.

3. Anzündkörper nach Anspruch 2, bei dem das zweite Stromzuleitungsteil (17) aus einer insgesamt axial ausgerichteten Zunge in Form eines Winkel mit einem zum Fußstück des Bodens der Anzündhülse (6) parallelen Fußstück besteht, das zur Befestigung der besagten Zunge an der besagten Hülse dient, **dadurch gekennzeichnet,** daß die Kontaktteile (37) vom Fußstück der besagten Zunge (17) ausgehen und sich axial nach außen erstrecken, so daß das Befestigungsende der besagten Stromzuleitungszunge (17) im Querschnitt insgesamt die Form eines U mit zwei Schenkeln (37) hat, die die besagten Kontaktteile bilden.

4. Anzündkörper nach Anspruch 2, **dadurch gekennzeichnet,** daß die freien Enden der Zungen des Sicherheitsbimetalls (16) einen insgesamt V-förmigen Querschnitt für den punktuellen Kontakt mit den konvexen Teilen (37) des zweiten Stromzuleitungsteils (19) haben.

5. Anzündkörper nach Anspruch 2, **dadurch gekennzeichnet,** daß das zweite Isolierteil zwei durchgehende seitliche Öffnungen (27) aufweist, zum einen für die Anbringung der zwei konvexen Teile (37) des zweiten Stromzuleitungsteils und zum anderen für die mit Spiel erfolgende Aufnahme der Zungen des Sicherheitsbimetalls (16).

6. Anzündkörper nach Anspruch 5, **dadurch gekennzeichnet,** daß jede durchgehende seitliche Öffnung (27) eine axial ausgerichtete, an jedem ihrer Enden abgeschrägte Oberkante, zwei zur Oberkante insgesamt senkrechte parallele Seitenkanten und eine axial ausgerichtete Unterkante in Kreisbogenform zur Abstützung der konvexen Kontaktteile (37) des zweiten Stromzuleitungsteils (19) aufweist.

7. Anzündkörper nach Anspruch 6, **dadurch gekennzeichnet,** daß die Unterkante seitlich durch zwei Nuten, die auch auf die Seitenkanten übergreifen, zum Einbau der konvexen Kontaktteile (37) des zweiten Stromzuleitungsteils (17) begrenzt ist.

8. Anzündkörper nach Anspruch 1, **dadurch gekennzeichnet,** daß ein zusätzliches elektrisch leitendes Kontaktteil (13) zwischen dem Kopf des Befestigungsorgans (14) und dem Fußstück des Stromanschlußbimetalls (12) eingefügt ist und daß das besagte Teil eine axial ausgerichtete Zunge aufweist, die mit dem zum Anzündkörper gehörenden Heizeinsatz zusammenwirken kann.
